# EUROPEAN PATENT SPECIFICATION

(11) **EP 0 472 625 B1**
(45) Date of publication and mention of the grant of the patent: **04.08.1993**
(21) Application number: 90908500.3
(22) Date of filing: 17.05.1990
(51) Int. Cl.: G01K 1/14, G01K 17/00

(54) **METHOD OF FIXING A TEMPERATURE SENSITIVE ELEMENT OF A HEAT CONSUMPTION METERING SYSTEM TO A SPOT WELDED SHEET IRON RADIATOR**
VERFAHREN ZUR BEFESTIGUNG EINES TEMPERATUREMPFINDLICHEN ELEMENTS EINES WÄRMEVERBRAUCHSMESSSYSTEMS AUF EINEM PUNKTGESCHWEISSTEN EISENBLECHHEIZKÖRPER
METHODE POUR MONTER UN ELEMENT THERMOSENSIBLE FAISANT PARTIE D'UN SYSTEME DE MESURAGE DE CONSOMMATION DE CHALEUR SUR UN RADIATEUR EN TOLE SOUDEE PAR POINTS

(30) Priority: 18.05.1989 DK 2414/89
(43) Date of publication of application: 04.03.1992
(73) Proprietor: BRUNATA A/S, DK-2400 Copenhagen NV (DK)
(72) Inventor: HANSEN, Jens, Peter, Fischer, DK-2960 Rungsted Kyst (DK)
(74) Representative: Lindgaard, Harry
(86) International application number: DK9000124
(87) International publication number: WO9014583

(56) References cited:
- DE-A- 2 852 301
- DE-A- 3 109 969
- FR-A- 2 392 373
- US-A- 2 244 798
- US-A- 3 592 061
- US-A- 4 463 800

## Description

The present invention relates to a method of fixing a temperature sensitive element of a heat consumption metering system to a spot welded sheet iron radiator comprising drilling a hole through the sheets of the radiator in one of the areas where the sheets are in contact with each other and welded together at distributed spots.

Temperature sensitive elements of the kind referred to above are used in order to be able to distribute the heating costs between the radiators connected to a central heating plant and accordingly, to distribute the heating costs between e.g. different tenants. In this connection it is important that the temperature sensitive element registers a temperature which is representative as regards the heat emitted from the radiator in question. In order to achieve this it is necessary that the temperature sensitive element is arranged upon the radiator in a definite way because the temperature sensitive element must not be positioned too near the side ,edges of the radiator and also not too near the top or bottom of the radiator. It is well known that the surface temperature of a radiator decreases from the top toward the bottom when the radiator is in use, and along the outer edges of the radiator the heat emission varies considerably and accordingly, temperatures measured along the outer edges will not be representative.

In cases where the temperature sensitive element is a temperature sensor of a circuitry it is, aestetically, and also due to practical reasons, preferred that the electric wire for the temperature sensitive element is positioned at the rear side of the radiator because the wire then will be well protected.

It is well-known to mount temperature sensitive elements of the kind here in question by positioning the elements in blocks consisting of material having high heat conductivity and to clamp such blocks against the rear side of the radiator e.g. by means of a U-shaped clamp. However, due to the fact that such clamp must grip about the edge of the radiator, temperature sensitive elements mounted in this way will be positioned relatively near one of the edges of the radiator which is inappropriate as it appears from the above. Moreover, it has been proposed to position a temperature sensitive element in a block of a material having high heat conductivity and to glue the block to the rear side of the radiator. However, such gluing also causes difficulties in particular if the mounting is to be made after the radiator has been arranged at its intended location and furthermore, a gluing does not secure a reliable heat transfer.

Moreover, as regards the prior art reference is made to DE-A-3109969 from which a sheet iron radiator is known wherein two holes are provided each surrounded by a welding seam. One of the holes is used for mounting a temperature sensitive element in the form of a block upon the front side of the radiator. The block is provided with a hole for a screw, the shaft of which is inserted through the hole and a nut is secured upon the shaft at the rear side of the radiator. Such mounting requires the use of a wrench at the reverse side of the radiator. An electric wire which is connected to the block is threaded through the other hole so as to extend along the reverse side of the radiator.

It is the aim of the present invention to provide a method according to which it becomes possible to mount the temperature sensitive element upon a radiator which is not only mounted along a wall but also is filled with heating medium and even may be in operation for heating.

Accordingly, methods which require welding or the use of a holding tool, e.g. a wrench, at the reverse side of the radiator are, in advance, excluded.

The problem constituting the basis of the present invention is in connection with a method of the kind referred to above according to the invention characterized by the following steps: mounting a pop rivet in said hole, threading an electric wire to the end of which the temperature sensitive element in the form of a circuitry temperature sensor of a size and shape to be receivable in the interior of the pop-rivet is secured through the pop-rivet from the front side of the radiator until the temperature sensitive element is accomodated in the interior of the rivet.

The invention is based upon the realization that it is possible by the shortening of the shaft of the pop-rivet caused during the mounting of the pop-rivet to achieve a complete and permanent sealing between the pop-rivet and the hole edges of the contacting sheet parts and that the drilling of the hole and the mounting of the pop-rivet take such a short time that only a neglectible leakage of heating medium out between the contacting sheet parts will occur before the complete and permanent sealing is obtained.

Due to the fact that a sensor is used having a size and a shape such that the sensor may be accommodated in the interior of the pop-rivet and that the sensor is mounted by drawing the sensor into the rivet by means of the electric wire at the end of which the sensor is arranged and until the sensor is in heat transferring contact with the rivet an effective fixing of the sensor in good heat transferring connection with the radiator is achieved in a simple way and the mounting location may be freely chosen. Moreover, due to the fact that the wire is drawn in from the front surface of the radiator through the hole, the wire will be positioned along the rear side of the radiator and accordingly, will not interfere with cleaning of the radiator and moreover, will not ruin the appearance of the radiator. Moreover, the rivet will be slightly visible only and a displacement of the mounting location of the sensor will in practice be impossible and accordingly, it is secured that the result of the measuring will not be distorted by non-authorized displacement of the measuring location. In this connection it should be mentioned that the method in question also offers a good security against leakage at the mounting location. Even though the front sheet and the rear sheet of modern radiators may be spot welded at the locations where the sheets abut each other, such spot weldings are with modern technique so small that it is not possible by drilling through the center of such spot welding to secure that the hole provided by the drilling does not extend into an area where the sheets are not welded together.

In order to achieve a good heat transfer between the sensor and the radiator a temperature sensitive element positioned in a tube secured to the wire and provided with a collar for cooperation with the front end of the rivet may according to an embodiment of the invention be used.

In order to achieve a further securing against leakage a sealing ring may be arranged around the shaft of the rivet and below the head of the rivet before the introduction of the pop-rivet into the hole and also a sealing material may be arranged upon the shaft of the rivet.

The invention will hereinafter be further explained with reference to the drawing wherein
fig. 1 shows a front view of an embodiment of a sheet iron radiator,
fig. 2 shows a section along section line II-II on fig. 1,
fig. 3 shows on an increased scale a horizontal section of a part of the radiator shown on fig. 1,
fig. 4 shows a pop-rivet partly in section, and
figs. 5 and 6 show pictures for illustrating the mounting of a temperature sensitive element in the form of an electric measuring sensor in the radiator shown.

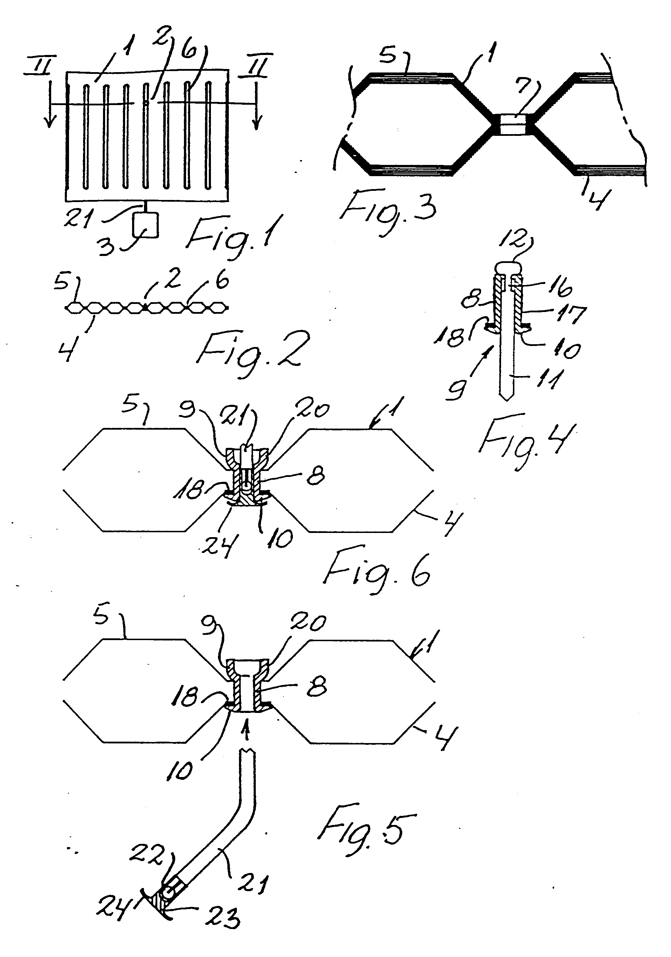

On fig. 1, 1 is a sheet iron radiator, 2 is a temperature sensitive element mounted upon the radiator and in the form of a measuring sensor and 3 is a connecting box constituting a part of an electric plant or a circuitry for registering the temperature measured by the measuring sensor 2 or a quantity proportional with such temperature. Such plant or circuitry usually also comprises means for summing up the heat emitted from each radiator connected to such plant or circuitry. As it appears from fig. 2, the radiator comprises a front sheet 4 and a rear sheet 5 which abut each other and are spot welded together along longitudinally extending areas 6 indicated on fig. 1. The sheets are sealingly welded to each other along their circumferences. The radiator comprises known and, accordingly, not further illustrated studs for circulating a heating medium through the radiator. The present invention may also be used in connection with radiators having planar front sheets and profiled rear sheets.

Fig. 3 shows a part of the radiator shown on fig. 1 on an increased scale and on fig. 3, 7 designates a hole provided by drilling from the front side of the radiator (represented by the front sheet 4). The hole is arranged in one of the longitudinally extending areas 6. The hole provided by such drilling has a size such that the hole can accommodate the shaft 8 of a pop-rivet (blind tubular rivet) which on fig. 4 generally is designated 9. The shaft comprises a head 10 in the form of a circumferentially extending collar and consists of a material which is comparatively easy to deform e.g. aluminium. The pop-rivet is provided with a draw pin 11 which in a way known per se extends out through the front end of the rivet and which at its rear end is provided with a head 12. The head 12 is connected with the draw pin 11 by means of a breakable neck 16. Around the shaft 8 sealing material 17 is arranged e.g. in the form of a piece of teflon tape wound around the shaft 8 and against the rear side of the collar shaped head 10 a sealing ring 18 also consisting e.g. of teflon is arranged. The draw pin 11 consists of a strong material e.g. steel.

The pop-rivet is mounted by moving the rivet from the position shown on fig. 4 into the hole 7 until the sealing ring 18 rests against the front sheet 4 of the radiator around the hole 7. Then a strong pulling force is applied to the pin 11 and simultaneously the head 10 is kept in its position. By such pull a deformation of the shaft of the rivet will occur as it clearly appears from fig. 5 because the head 12, which has a greater outer diameter than the internal diameter of the shaft of the rivet, will expand the end of the rivet which has been pushed through the hole 7, and a collar 20 as indicated on fig. 5 will be formed.

The expansion of the end of the rivet in order to form the collar 20 requires relatively high forces, however, not greater than the breakable neck 16 will be able to resist such forces. When the formation of the collar has occured and the head 12 accordingly is positioned at the bottom of the collar 20, the head 12 will start to draw material of the shaft into the hole 7 whereby the shaft is shortened and expanded whereby sealing is obtained between the outer surface of the shaft and the sheet edges around the hole. Such deformation continues until the deformation force becomes so high as to exceed the strength of the breakable neck 16 which accordingly breaks and the head 12 falls off whereafter the pin 11 is withdrawn.

After the mounting of the rivet a measuring sensor 22 is mounted in the hole provided by means of the pop-rivet as indicated on fig. 5, wherein 21 designates an electric wire at the end of which the sensor 22 is arranged. The sensor 22 may in a way known per se be constituded by a thermo element or by a thermistor i.e. a restistor, the resistance of which depends upon the temperature, or another means which may deliver a signal proportional with the temperature. As it appears from the arrow on fig. 5, the wire is drawn through the rivet from the front surface of the radiator and this drawing continues until the position shown on fig. 6 is obtained, from which it will be seen that the sensor is now positioned within the shaft of the pop-rivet.

According to the embodiment shown on fig. 5 the sensor 22 is arranged within a small tube 23 having a circumferentially entending collar 24 which in the mounted position as it appears from fig. 6 rests against the front surface of the head of the pop-rivet.

In order to increase the heat transfer between the sensor and the radiator, the tube 23 may be filled with a good heat conducting material, e.g. heat conducting silicone rubber and, moreover, the outer surface of the tube may before the mounting be provided with a layer of the same material. Hereby it is achieved that the sensor will be in good heat conducting connection with the tube and the tube will be in good heat transferring connection with the rivet which as explained above is in good heat transferring connection with the radiator. Simultaneously the material mentioned, e.g. heat conducting silicone, will act as an adhesive whereby the sensor is secured in the pop-rivet. Such securing may be further improved by connecting the wire 21 with the box 3 in a tight condition.

## Claims

1. A method of fixing a temperature sensitive element (2,22) of a heat comsumption metering system to a spot welded sheet iron radiator (1) comprising drilling a hole (7) through the sheets (4,5) of the radiator in one of the areas where the sheets are in contact with each other and welded together at distributed spots, **characterized** by the following steps: mounting a pop rivet (9) in said hole (7), threading an electric wire (21) to the end of which the temperature sensitive element (22) in the form of a circuitry temperature sensor of a size and shape to be receivable in the interior of the pop-rivet is secured through the pop-rivet (9) from the front side of the radiator until the temperature sensitive element is accomodated in the interior of the rivet.

2. Method according to claim 1, **characterized** by using a temperature sensitive element (22) positioned in a tube (23) secured to the wire (21), said tube being provided with a collar (24) for cooperation with the front end (10) of the rivet.

## Patentansprüche

1. Verfahren zur Befestigung eines temperaturempfindlichen Elements eines Wärmeverbrauchsmeßsystems an einem punktgeschweißten Eisenblech-Heizkörper (1), umfassend das Bohren eines Lochs (7) durch die Bleche (4, 5) des Heizkörpers in einem der Bereiche, wo die Bleche miteinander in Berührung stehen und an verteilten Punkten miteinander verschweißt sind, **gekennzeichnet** durch folgende Schritte: Anordnen eines Dornniets (9) in der Öffnung (7), Hindurchziehen eines elektrischen Drahtes (21), an dessen Ende das temperaturempfindliche Element (22) in Form einer Temperatursensorschaltung einer Größe und Form, die in das Innere des Dornniets einsetzbar ist, befestigt ist, von der Vorderseite des Heizkörpers durch den Dornniet (9) hindurch, bis das temperaturempfindliche Element im Inneren des Niets angeordnet ist.

2. Verfahren nach Anspruch 1, **gekennzeichnet** durch Werwendung eines temperaturempfindlichen Elements (22), das in einem an dem Draht (21) befestigten Rohr (23) angeordnet ist, wobei das Rohr mit einem Kragen (24) zum Zusammenwirken mit dem vorderen Ende (10) des Niets versehen ist.

## Revendications

1. Procédé pour fixer un élément thermosensible (2, 22) d'un système de mesure de la consommation de chaleur à un radiateur en fer blanc soudé par points (1), consistant à percer un trou (7) dans les tôles (4, 5) du radiateur, dans l'une des zones dans lesquelles les tôles sont placées en contact l'une avec l'autre, et soudées ensemble en des points répartis, caractérisé par les étapes suivantes: montage d'un rivet à fixation rapide (9) dans ledit trou, enfilage d'un fil électrique (21) à l'extrémité duquel l'élément thermosensible (22), sous forme d'un capteur de température d'un circuit, présentant une taille et une forme lui permettant de se loger à l'intérieur du rivet à fixation rapide (9), est fixé dans ce dernier, depuis le côté avant du radiateur, jusqu'à ce que l'élément thermosensible soit placé à l'intérieur du rivet.

2. Procédé, selon la revendication 1, caractérisé par l'utilisation d'un élément thermosensible (22) positionné dans un tube (23) fixé au fil électrique (21), ledit tube étant pourvu d'un collet (24) prévu pour coopérer avec l'extrémité avant (10) du rivet.
